# EUROPEAN PATENT APPLICATION

(11) **EP 2 180 679 A1**
(43) Date of publication of application: **28.04.2010**
(21) Application number: 10151108.7
(22) Date of filing: 26.04.2005
(51) Int. Cl.: H04M 1/725, H04M 1/68, H04W 12/00

(54) **Secure communications system comprising a mobile encryption/decryption unit, a fixed communications unit and a clip-on module attachable to the mobile encryption/decryption unit**

(62) Divisional of application: 05009104.0
(71) Applicant: Sectra Communications AB, 583 30 Linköping (SE)
(72) Inventor: Hedström, Johan, 585 98, LINKÖPING (SE); Lindwall, Anna, 590 41, RIMFORSA (SE)
(74) Representative: Bokinge, Ole

(57) **Abstract**

A secure communications system (100, 200) comprising a detachable security module (140) and a stationary communications unit (120) is disclosed. The detachable security module comprises encryption means (160), and is connectable to the stationary unit for receiving encrypted data and delivering decrypted data, and/or receiving clear data and delivering encrypted data. In addition, the detachable security module (140) is a mobile stand-alone encryption/decryption communications unit (140) provided with its own user interface (141) and access point interface (143) for use as a secure mobile communications unit (140) when disconnected from the stationary unit (120). A mobile encryption/decryption communications unit and a stationary unit for use in such a secure communications system are also disclosed, as well as a clip-on unit for use with the mobile unit.

## Description

### Field of the invention

The present invention relates to a security module, a stationary communications unit for interaction with the security module and a secure communications system comprising the security module and the stationary communications unit.

### Background

Secure communication of secrets has a long history, however, today with numerous types of different communications channels and advanced powerful equipments and methods for decryption and eavesdropping, secure communication using strong protection is more important than ever.

Secure telephone units providing strong encryption (top secret classification) exist in both stationary and mobile variants.

A stationary variant is the Secure Terminal Equipment (STE), which is an encrypted telephone communications system for wired communications. STE is designed to use ISDN telephone lines offering speeds of up to 128k bits per second. In addition to voice communication, the STE can also be utilized for data and fax transmission through a built-in RS-232 port. STE sets look like ordinary high-end office desk telephones and can place unsecured calls to anywhere on the public switched telephone network (PSTN). There is a PC Card slot in the STE that allows a Fortezza Plus (KOV-14) Crypto Card to be inserted. When a Crypto Card that has been properly configured is inserted, secure calls can be established between STE phones. All cryptographic algorithms are in the Fortezza Plus card, which is in the form of a PC Card. The Fortezza card stores private keys and other data needed for access of encrypted information. The Fortezza Plus (KOV-14) uses strong type 1 encryption and may be used for information classified up to top secret.

A mobile variant of a unit for telephone communication providing strong encryption is Tiger XS, which is a high-grade security mobile unit developed by the present Applicant. Tiger XS is designed to fulfil NATO requirements up to the security level top secret. The unit is provided with a headset for voice communication (clear data), an USB connector for communicating clear data with a laptop or PDA and yet another connector for serial communication of encrypted data (black data) to/from an external access point such as a radio communications unit.

However, even though such known systems enable an adequate security level, there are still problems not addressed by these prior art solutions.

Before introducing a new encryption system in a company, government or any other organisation, certification of the encryption hardware takes place. Typically, the stronger the encryption, the more rigorous certification process is required. Such certification involves testing and formal analysis of cryptographic security, functional security, emissions security and security of the product manufacturing and distribution process. The process is both time consuming and expensive. Every new type of cryptographic equipment must undergo the testing. The delay and expenses related to introducing new cryptographic equipment are factors that delimits and restricts use of encrypted information exchange to a few types of communications equipments and networks/channels, for example voice communication using a stationary phone connected to a PSTN system as is the case for the STE. A practical consequence of the delimited and restricted use is a decreased security level.

A user is sometimes positioned in a stationary office environment using conventional office devices for communication such as stationary telephones, fax and having stationary access to wired networks and communications channels such as for example a PSTN. At other occasions the same user may be traveling, using a mobile phone and a laptop having access to wireless networks and communications channels, for example GSM, UMTS, WLAN etc. Equipment for insecure communication, both stationary and mobile, using a conventional communications channel or network is typically well known to the user, for example faxes or standard PSTN telephone sets in the stationary office environment, and a conventional mobile phone in the mobile environment. However, if a more comprehensive secure communication policy is introduced, requiring secure communication over various communications channels, both in the office environment and on the move, the user must in addition to the insecure conventional communications devices learn how to use various kind of encryption devices and how to switch between these. For example the user must make sure that the various units have the correct encryption keys, access information and address information to users that are available for secure communication, how to activate encryption etc. Further, even when a single encryption device is used, the use of encryption is often associated with difficulties and complicated technical maneuvers, e.g. activating encryption, selecting the correct encryption keys, connecting the encryption device to the available communications channel, finding a user and establishing a connection, etc.

A majority of people in need of secure communication have no interest of using a variety of devices and being burdened with the aforementioned difficulties. Instead they simply want to communicate in a secure way with a minimum of effort. Thus, many people present a reluctant attitude to using secure communication, especially when secure communication is required over more than one communications channel and using multiple devices. Consequently, the resulting security level is in practice heavily dependent on the attitude of the users, and the practical security level is more often than not significantly lower than what is theoretically obtainable.

US 20020183005A1 discloses a portable device and a codeless telephone connected via Bluetooth. The portable device converts voice signals using a voice codec and an encryption module and transmits the encrypted signal to the codeless telephone which transmits the signal further to a counterpart codeless telephone via a network.

### Summary of the invention

An objective of the present invention is to overcome or at least alleviate the problems in the prior art. A specific object is to provide a communications system that more easily is accepted by a user, reducing discomfort and difficulties when switching from clear, insecure communication using a conventional communication channel to secure communication using the same channel. Another specific object is to provide a communications system that more easily is accepted by a user, reducing discomfort and difficulties when switching between secure communication in a stationary environment and in a mobile environment. Another specific object is to minimize the need for expensive and time-consuming certification procedures. Yet another specific object is decrease the need for a user to learn how to use different devices for encryption in different user environments, such as in an office environment with stationary access points to communications channels or networks, or on the move using wireless communications channels or networks, and/or for different types of data being communicated, such as fax data, voice data etc.

The invention is defined by the appended independent claims. Preferred embodiments are set forth in the dependent claims and in the following description and drawings.

### Brief description of the drawings

For exemplifying purposes, embodiments of the present invention will now be described with reference to the appended drawings, wherein:
Fig. 1 is a schematic perspective view over a secure communications system comprising a mobile unit and a stationary unit.
Fig. 2 is a schematic view over interfaces of the mobile unit and the stationary unit in the in the secure communications system.
Fig. 3a is a schematic view over a multipurpose connector with functional grouping of pins.
Fig. 3b is a schematic view over a multipurpose connector being the counterpart to the multipurpose connector of fig. 3a.
Fig. 4a is a schematic view of functional blocks and interfaces of the mobile unit.
Fig. 4b is a schematic view of functional blocks and interfaces of the stationary unit.
Fig. 5 is a schematic perspective view over a secure communications system comprising the mobile unit, the stationary unit and a clip-on module.
Fig. 6 is a schematic view of functional blocks and interfaces of the clip-on module.

### Description of embodiments

The invention will now be described with reference to embodiments.

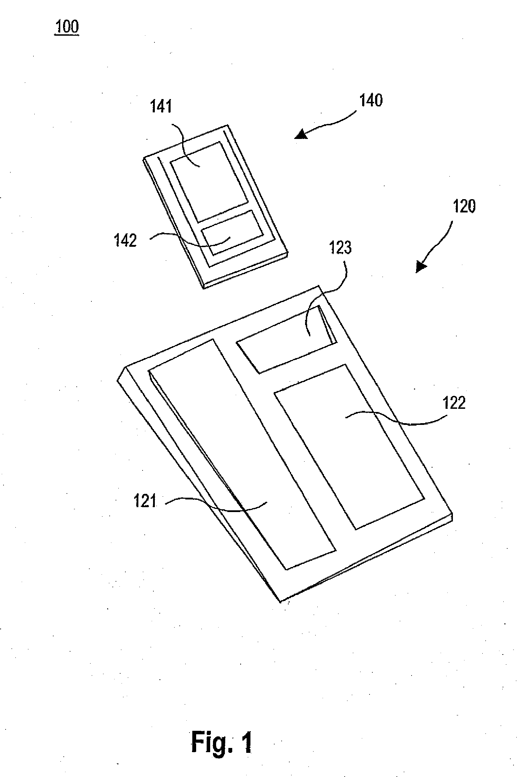

Fig. 1 shows an overview of a secure communications system 100 comprising a mobile encryption/decryption communications unit 140, supporting communication classified as top secret, and a stationary unit 120 for office use. A more detailed description of the exact type of encryption used is not relevant for the invention, and since many such encryption methods are per se previously known this will not be discussed further. The stationary unit has the appearance of an ordinary office telephone, i.e. a desktop telephone, and is equipped with a handset 121 and a keypad 122. This facilitates switching from ordinary insecure communication to secure communication. The stationary unit 120 is provided with a slot 123 fitting the mobile unit 140.

The mobile unit 140 has a user interface comprising a display 141 and a keypad 142. The slot 123 has a multipurpose multi-pin connector 128 (not shown in fig. 1), which connects to a corresponding connector 143 (not shown in fig. 1) on the mobile unit 140. The mobile unit 140 is connected to the stationary unit 120 by placing it in the slot 123, resulting in that the connectors 124,143 (not shown in fig. 1) are brought in contact and the stationary unit 120 is automatically enabled for secure communication, e.g. over a PSTN connected to the stationary unit 120When the units 120, 140 of the system are connected, the stationary unit 120 interacts with a user via the keypad 122 of the stationary unit, the handset 121 and the display 141 of the mobile unit. For example, a user may use the keypad to select a person or number to communicate with by selecting from a list showing in the display of the mobile unit 140, i.e. a user is presented with the same graphical user interface as when using the mobile unit detached from the stationary unit 120, i.e. as a stand alone communications unit, for example by placing calls by using the display 141 and the keypad 142 of the mobile unit. Once the user has learned and is familiar with the user interface of the mobile unit 120, as presented by using the display 141, it becomes very easy for a user to communicate securely independent on the environment and which communication channels that are used. The same user interface is presented to the user in all cases.

When a connection has been established between the units 120, 140, external red data (clear data) is input to the stationary unit by the user directly via the handset 121 or indirectly via an external device such as a fax or a computer.

The input red data is delivered by the stationary unit 120 to the mobile unit 140 that encrypts the data and output it back as black data (encrypted data) to the stationary unit 120. The black data is modulated by the stationary unit 120 and is output to a telephone interface 130 (not shown in fig. 1).

The telephone interface is connected to the PSTN, and the person with whom the communication is established is, indirectly or directly, connected to this network as well. For example, one of the users may be using a mobile unit 120 stand alone in a mobile environment with connection to e.g. a GSM network, while the other is using the mobile connected to the stationary unit 120 with connection to a PSTN. The GSM network and the PSTN has connections, i.e. it is possible to places calls between the networks, thus the users are indirectly connected to each network, respectively.

Input black data, i.e. encrypted data from the user with whom the secure communication is established, is received via the telephone line interface 130 (not shown in fig. 1), demodulated and passed to the mobile unit 140 for decryption. The decrypted black data is then delivered back to the stationary 120 unit as red data and delivered to the user e.g. via the handset 121, in case of voice communication, or to a connected fax via a red fax data interface 124, 125(not shown in fig. 1), in case of fax communication.

By using the system 100, a user may use the same encryption/decryption device for various types of secure communication (e.g. voice over PSTN, fax over PSTN, voice over GSM etc) and the user only has to learn how to handle a single user interface, i.e. the GUI presented to the user on the display 141. For security reasons it may be advantageous to couple a certain encryption/decryption device to a certain user, which is facilitated by the system 100 for which a user preferably is responsible and associated with a specific mobile unit 140. This is also advantageous on a practical level since a user may want to store contact information and information on encryption/decryption keys in the mobile unit 100 to be able to efficiently establish secure communication.

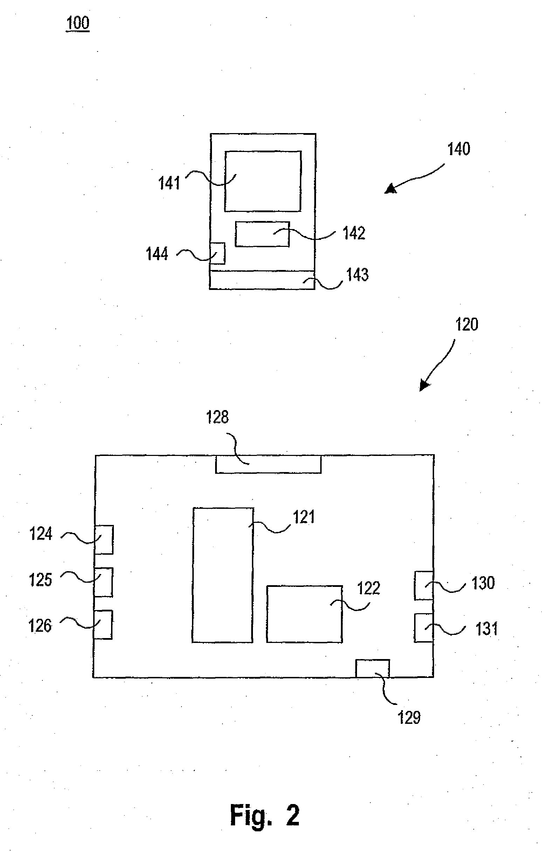

Referring now to the schematic drawings of fig. 2, the external interfaces of the devices 120, 140 in the system 100 will be described in some detail.

For input/output of red data between the stationary unit 120 and a user-controlled device such as for example a fax, the unit 120 is provided with an analogue fax interface 124, typically represented by a standard RJ-11 socket. For red data input/output the unit is also provided with a digital fax interface 125 in the form of a synchronous serial port represented by a DSUB25 connector. Often high security fax machines, shielded not to radiate secrete information during fax transmissions, are provided with digital fax interfaces. Further, the stationary unit 120 is provided with a red data interface being a USB connector for connecting the stationary unit 120 to a PC. Other types of connectors such as Firewire, RS-232 or similar ports may be used in other embodiments. Optical interfaces may also be used.

In another embodiment, the stationary unit 120 may comprise a computer network interface, for example a network card for Ethernet connection, and be associated with a unique IP address in a LAN or intranet.

The stationary unit 120 of fig.2 is also provided with a handset 121 equipped with microphone (not shown) and loudspeakers (not shown) for input/output of red analogue voice data.

Voice communication, fax communication and text-based communication via a computer, are the predominant conventional ways of communicating to/from an office environment. Hence, it is of great interest to support these with strong encryption, as is the case of the stationary unit 120 of the system 100.

For input/output of black data between the stationary unit 120 and an access point, the unit 120 is provided with a line interface 130 being a RJ-11 connector. The access point connected to the line interface 130 is typically a conventional telephone network (PSTN). The unit 120 is also provided with a black data serial interface represented by a RS-232 connector which allows the stationary unit to communicate via alternative communication channels or networks, for example by connecting the black data interface 130 to an external modem and/or equipment that allows black data to be transmitted using an alternative access point. In other embodiments, supported access points include private mobile radio (PMR), such as TETRA or Tetrapol and satellite telephony, such as Iridium, Inmarsat, Thuraya or Aces.

In another embodiment, the stationary unit 120 is furnished with a black data network interface being a connector to an Ethernet, allowing secure communication over IP networks, i.e. typically the Internet or an intranet. In such an embodiment, typically the unit also is provided with a red data network interface. In that case, the stationary terminal preferably is equipped with software and/or hardware supporting red data input to the stationary unit via a red data network interface and software/hardware that packetizes and sends black data as IP-packets, for example supporting IP-telephony, email or some other type of conventional messaging service in a computer network environment.

For control of the system 100 when the stationary unit 120 has the mobile unit connected, the stationary unit 120 is equipped with a keypad 122, similar to that of an ordinary telephone unit. Feedback on input via the keypad is presented to the user using a graphical user interface presented on the display 141. The keypad 122 may comprise a joystick or other means for navigating in the GUI shown on the display 141. The stationary unit also has a power supply connector 129. A mobile unit 140 connects to the stationary unit through the multipurpose multi-pin connector 128. When the mobile unit is connected to stationary unit 140, the stationary unit is activated automatically and is providing a user with secure communication using the communication types and communications channels supported by the stationary unit, e.g. secure voice data over PSTN, secure fax data over PSTN or ISDN etc.

The mobile unit 140 is provided with a multipurpose multi-pin connector 143 at its bottom, fitting the multipurpose multi-pin connector 128 of the stationary unit 120. The units 120, 140 are connected via the connectors 128, 143, typically by placing mobile unit in the slot 123.

The multipurpose connectors 128, 143 are used for transmission of both red and black data between the stationary unit and the mobile unit, including red voice data, red control data signals and red fax data. It is also used for supplying the mobile unit with power.

Further, the mobile unit 140 is equipped with a display 142 that is used both when the mobile unit 120 is positioned in the stationary unit 140 and when the mobile unit 120 is used as a stand-alone mobile encryption/decryption unit. The keypad 122 of the mobile unit 120 is only used when the mobile unit 120 is detached from the stationary unit 140. The mobile unit 120 also comprises a headset connector 144 for connecting a headset to provide the mobile unit with red in/out analogue voice data signals. The headset connector 144 is only used in cases when the unit is separated from the stationary unit. Another interface present on the mobile unit is a red data interface (not shown) represented by a USB port, similar to the red data interface 126 on the stationary unit, but used when the mobile unit is detached from the stationary unit.

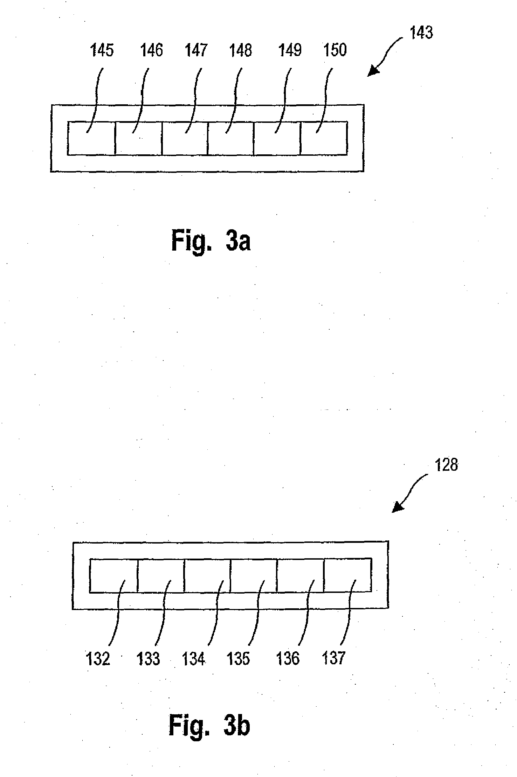

Fig. 3a and 3b schematically shows functional sets of pins supported by the multipurpose multi-pin connector 143 of the mobile unit and the counterpart multipurpose multi-pin connector 128 of the stationary unit, respectively. The connectors comprises red data input/output pins 145, 132, black data input/output pins 150, 137, red control data input/output pins 148,135, a red analogue voice data input/output pin set 146, 133, red fax data input/output pins 147, 134 and a power supply pin set 149, 136. The power supply pin set is for delivering power from the stationary unit to the mobile unit, and, for example, to charge a battery in the mobile unit. The red data pins 145, 132 are for digital data supplied to the stationary unit by e.g. by a PC via the red data interface 126 of the stationary unit 120.

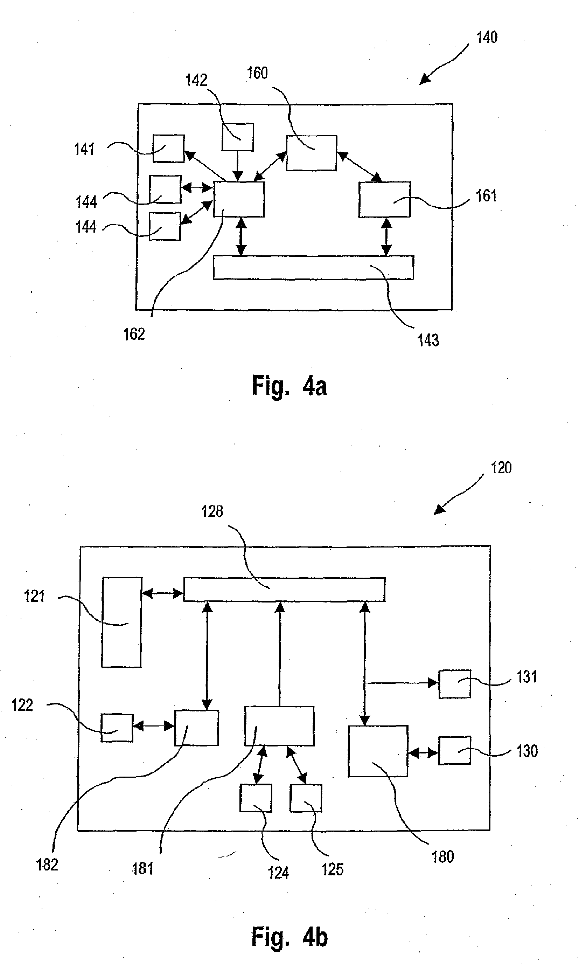

Fig. 4a schematically shows functional blocks of the unit 120 and their relation in terms of signalling illustrated by arrows.

The red processing block 162 processes all types of red data, i.e. input red data or decrypted black data. The red processing block 162 e.g. takes care of audio digitalisation and voice coding, converting the red analogue voice data into a format that can be encrypted by the encryption/decryption block 160.

The red processing block 162 is also responsible for reacting and taking action upon user interaction via the keypad 142, or based on control data coming via the multipurpose connector from the stationary unit. The red data processing block 162 also handles the graphical user interface (GUI) presenting information to a user via the display 141.

The GUI is available to a user through the display both when the mobile unit is detached from the stationary unit and when it is connected to the unit, i.e. the user is always presented a same and familiar GUI independent on where secure communication is taking place and on what type of secure communication that is used. Functions that are supported by the red processing block 162 and presented to a user through the GUI includes phone book function, key management and generation of secure text messages, similar to SMS on a mobile phone, the text messages being encrypted/decrypted by the encryption/decryption block 160. Part of the key management, i.e. management of keys required for decryption and encryption, may be combined with the phone book functionality. That way the corrects keys are coupled to the correct persons or groups, similar to coupling address information and phone numbers to persons or groups, which makes it very easy for a user to establish secure communication.

When the mobile unit is connected to the stationary unit 120, the red processing block 162 will only accept voice data and user interaction via the stationary unit 120, available via the multipurpose connector 143 in the form of red voice data and red control data signals.

On the opposite side of the encryption/decryption block 160, there is a black processing block 180 responsible e.g. to make sure that black data is communicated as serial data using AT-commands.

In alternative embodiments other types of communication protocols may be used. Typically there is a default black data communication protocol which is the same for all compatible mobile units 140 and stationary units 120 but additionally also other black data communications protocols may be supported, which are used when communication is established using certain types of access points. For example, the black data processing block may communicate black data via an internal Bluetooth interface (not shown) to nearby equipment such as a mobile phone acting as an access point to a GSM network or similar. This is typically the case when the mobile unit is detached from the stationary unit and used as a stand-alone mobile communications unit. In other embodiments the black data processing block may communicate data using other types of wireless access point interfaces, such as a WLAN or DECT interface.

In another embodiment the black data processing block may comprise a wireless access point, for example providing access to a GSM, UMTS or GPRS enabled network. The distinction "wireless access point" and "wireless access point interface" is made to point out that in the former case, the wireless communication is for reaching an access point, typically located in the near surroundings of the mobile unit, and which provides access to a communications channel or network to which the recipient of the black data has connection to.

When the mobile unit is connected to the stationary unit 120, or to a mobile access point via a multipurpose connector 128, the black data is instead communicated "by wire", i.e. in this case through the physical connection established by the connectors 128, 143 brought in contact, i.e. the black data communication is taking place over a physically connected access point interface. In an alternative embodiment the mobile unit 120 may be provided with a separate black data input/output interface, e.g. in the form of a serial RS-232 interface similar to the interface 131 for black data on the stationary unit 120. The separate black data input/output interface on the mobile unit may be used as a wired access point interface when the mobile unit 140 is used being detached from the stationary unit 140.

Black data being received by the mobile unit 140 is handled by the black data processing block 181 and is then delivered to the decryption/encryption block 160 for decryption.

After decryption, the decrypted, thus red, data is forwarded to the red processing block 162. Depending on the type of communication established, the red data is adjusted to comply with the relevant communication type; for example, red voice data will be processed into a voice signal and forwarded to either the handset interface 144 or to the red voice data pins of the multipurpose connector. The latter in case the mobile unit 140 is connected to the stationary unit 120. In cases other than voice communication, the red data received by the red processing unit 162 from the encryption/decryption device 160 is forwarded to the red data or red fax data pins of the multipurpose connector, when the mobile unit is connected to the stationary unit 120, or to the red data interface 164, when the mobile unit is detached.

Fig. 4b schematically shows functional blocks of the stationary unit 140 and their relation in terms of signalling illustrated by arrows.

External data in the form of red voice data is input via the handset 121 and forwarded to the voice data pin set 133 of the multipurpose connector 128.

In case of fax communication, input of red fax data is delivered either via the analogue fax interface 124 or the digital fax interface 125 to a fax interface converter 181, which basically is responsible to convert the fax data into a red data format that later can be encrypted. The converted fax data is delivered to the fax data pin-set 134 of the multipurpose connector 128.

A user that interacts and controls the stationary unit is using the keypad 122, and the signals generated are handled by a Man Machine Interface (MMI) block 182 converting the signals into red data control signals that are forwarded to the red control pins 135 of the multipurpose connector. Feedback on user actions is made via the display 141 of a mobile unit that is connected to the stationary unit 120, however, some basic feedback may also be done using LED indicators (not shown) on the stationary unit 120, but at least all types of more comprehensive interaction relating to encryption/decryption should preferably take place using the GUI showed on the display 141 of the mobile unit 140.

Black data that are received from the black data pins 137 of the multipurpose connector 128 is delivered to the black data serial interface 131 or to an internal modem 180. The modem is PSTN modem or an ISDN modem. The modulated black data is then delivered to the line interface 130. Black data being received via the line interface 130 is demodulated by the modem block 180 and then delivered to the black-data pins of the multipurpose connector 128. Black serial data that is received from the black data serial interface 131 is delivered to the multipurpose connector 128 as well.

In an alternative embodiment there is a functional block for converting black data into IP traffic, for example voice-over-IP in the case of black voice data. The same block would also convert received IP data into the black data format used internally by the stationary unit. The black IP data would typically be communicated over a computer network interface to an access point being the Internet or a LAN such as an intranet.

In an alternative embodiment there is a functional block responsible for converting between an internal red data format of the stationary unit and IP-data. The red IP-data is communicated externally via a red computer network interface and internally via the red data pins of the multipurpose connector. In case a user interacts with the stationary unit via the red computer network interface, the converted IP-data is forwarded as red control signals to the red control pins of the multipurpose connector.

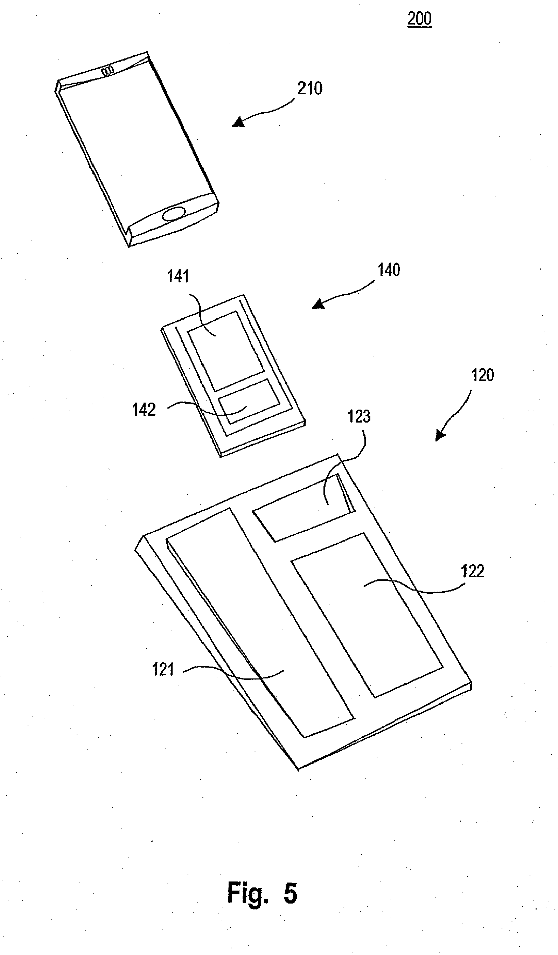

Fig. 5 shows an overview of a secure communications system 200 comprising a mobile encryption/decryption communications unit 140., a stationary unit 120 e.g. for office use, and a clip-on unit 200 adapted to fit the mobile unit 140. The clip-on unit 210 is used to provide the mobile unit with communication means when it is used as a stand-alone unit, i.e. detached from the stationary unit 120.

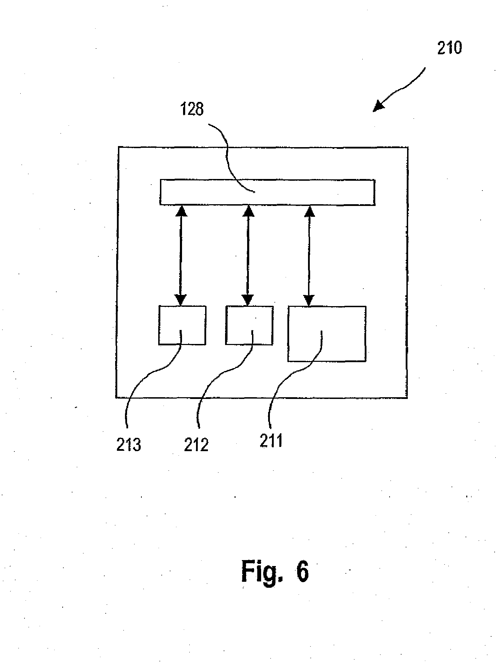

Fig. 6 is showing a schematic view over interfaces and functional block of the clip-on module 210, with arrows indicating signaling. The module 212 comprises a multipurpose connector 128, i.e. the same type of connector that is used in the stationary unit 120 and that previously was described in some detail with reference to fig. 3b. The clip-on module further comprises a loudspeaker 213 and a microphone 212, which provides a mobile unit 140 with means for input/output of red analogue voice data from/to an user, i.e. when using the clip-on module the mobile unit may be used as when using an ordinary mobile phone without a headset.

In an alternative embodiment the clip-on module 210 is providing the mobile unit 140 with a keyboard (not shown), e.g. for direct input of clear data to the mobile unit 140.

The clip-on module 210 also comprises means for wireless communication 211 over GSM, i.e. the clip-on module 210 comprises a wireless access point 211. It is advantageous to provide the mobile unit with a wireless access point 211 through the clip-on unit, rather then having a built in wireless access point in the mobile unit 140. There may be various clip-on modules 210 providing access point to different wireless communications channels or networks, such as for example to GSM or UMTS networks, making it very convenient to use the mobile unit 140 and switch between different types of mobile communications channels or networks. It is simply a matter of changing clip-on module. In case a mobile unit has a built in wireless access point, or wireless access point interface, the connection of a clip-on module 210 providing wireless access takes precedence. In such a case a clip-on module 210 may be used as a supplementary wireless access point or wireless access point interface.

In an alternative embodiment, the clip-on module 210 comprises means for video communication, e.g. a camera. This may be suitable when a clip-on module 210 supports UMTS, or any other type of communications networks or channels that supports video calls. The video data from the camera is typically converted to red data before being passed to the mobile unit 140 using the multipurpose connector 128 of the clip-on module 210. In the following numbered paragraphs various aspects and currently non-claimed embodiments are described. The reference numerals are exemplifying and to be construed as non-limiting, referring to above discussed features to increase ineligibility.
1. A secure communications system 100, 200 comprising a detachable security module 140 and a stationary communications unit 120,the detachable security module 140 comprising
   encryption means 160 for encrypting and decrypting data; and
   data communication means 143 adapted for receiving encrypted data and delivering decrypted data, and/or receiving clear data and delivering encrypted data, and the stationary unit 120 comprising
   a clear data interface 121, 122, 124, 125, 126 adapted for receiving and/or delivering data from/to an external device or user;
   an access point interface 130, 131 adapted for connecting the stationary unit to a communications channel or network; and
   a security module interface 128 for enabling data transfer between the detachable security module 140 and the stationary unit 120,
   wherein the detachable security module 140 is a mobile stand-alone encryption/decryption communications unit 140 provided with its own user interface 141 and access point interface 143 for use as a secure mobile communications unit 140 when disconnected from the stationary unit 120.
   A detachable security module with its own user interface and that can be used as a stand alone mobile unit, provides a user with a single encryption device that can be used both in a stationary environment, such as in an office, and in a mobile environment. Hereby, the expenses for certification procedures can be limited to certification of a single encryption device instead of two, one for each environment. Furthermore, since the unit can be used as a stand-alone unit, a user can directly use it when moving from a stationary environment to a mobile environment, simply by detaching the unit from the stationary unit and start using it for mobile communication by interacting via its user interface, which is the same, and thus familiar, in both environments. For example, a single unit, i.e. the mobile unit, that may comprise keys for encryption/decryption and contact information for establishing secure communication, is available and used independently on the environment where secure communication is taking place. Thus, the present solution provides a combination of cost efficiency, high security and convenience of use.
2. A secure communications system 100, 200 according to paragraph 1, wherein the user interface 141 of the mobile unit is usable as a user interface 141 for the stationary unit 120 when the mobile unit 140 is connected to the stationary unit 120.
   The user interface of the mobile unit may be usable as a user interface for the stationary unit when the mobile unit is connected to the stationary unit. The shared user interface, i.e. same user interface for both units, e.g. represented by a GUI shown on the display, reduces the need for a user to learn how to use and interact with two separate encryption devices.
3. A secure communications system 100, 200 according to paragraph 1 or 2, wherein the stationary unit 120 is arranged to encrypt/decrypt data using the mobile unit 140 when the mobile unit 140 is connected to the stationary unit 120.
4. A secure communications system 100, 200 as claimed in any of claims 1-3, wherein the stationary unit 120 is automatically activated for encryption/decryption when the mobile unit is connected to the stationary unit 120.
   The automatic activation when connecting the units, e.g. by contacting the unit using the multipurpose connectors, reduces the discomfort of complicated activation and switching activities when moving between stationary use and mobile use. For example, a user simply may place the mobile unit in a slot of the stationary unit resulting in that the stationary unit directly is ready for secure communication over the communications channels and networks available to the stationary unit.
5. A secure communications system 100, 200 according to any one of paragraphs 1-3, the system 100, 200 further comprising a clip-on module 210 providing the mobile encryption/decryption unit 140 with a wireless access point to a mobile communications channel or network when the mobile encryption/decryption unit 140 is disconnected from the stationary unit 120.
   Introducing a clip on module further aids in making secure communication easily available to a user. Depending on which mobile environment the user may be located in; the user may select a suitable clip-on module providing wireless access to the communications channel or network of desire in the environment.
6. A secure communications system 100, 200 according to any one of paragraphs 1-5, wherein the security module interface 128 is a multipurpose connector 128, wherein the stationary unit 120 and/or a clip-on module 210 comprises a multipurpose connector 128 adapted for connecting to the multipurpose connector 143 of the mobile unit 140.
   Use of a multipurpose connector facilitates quick and easy connection of the mobile unit to the stationary unit and/or a clip-on module, which in turn facilitate switching between mobile and stationary environments.
7. A mobile encryption/decryption communications unit 140, comprising
   encryption means 160 for encrypting and decrypting data;
   data communication means 143 adapted for receiving encrypted data and delivering decrypted data, and/or receiving clear data and delivering encrypted data from/to the stationary unit 120;
   a user interface 141; and
   an access point interface 143 adapted for connecting the unit 140 to an external communications channel or network; wherein the mobile encryption/decryption communications unit 140 is usable both as a stand-alone mobile communications unit 140 and as a security module 140 for encryption/decryption when connected to a stationary unit 120, said stationary unit 120 being provided with a clear data interface 121, 122, 124, 125, 126 and an access point interface 130, 131.
   As a result, the same mobile encryption/decryption communications unit may be used also for secure communication in a stationary environment, with access, via the stationary unit, to other access points than in the mobile environment and to other types of clear data.
8. A mobile encryption/decryption communications unit 140 according to paragraph 7, wherein the mobile unit 140 is provided with a graphical user interface.
9. A mobile encryption/decryption communications unit 140 according to paragraph 7 or 8, wherein the mobile unit 140 comprises encryption/decryption key management functions presented to a user via the user interface 141.
   It is advantageous to provide key management functions in the mobile unit since the unit is used in both mobile and stationary environments for encryption/decryption. This way a user only has to learn and use key management using a single function in a single device.
10. A mobile encryption/decryption communications unit 140 according to any one of paragraphs 7-9, wherein the mobile encryption/decryption communications unit 140 is approved for communication of classified information by a national security authority.
   National security authorities often use levels of classification such as "restricted", "confidential" and "secret" and "top secret". The higher levels comprise stronger encryption. Often governments, or large organisations or companies use equipment that complies with any of those levels. A mobile unit meeting up with requirements set by a national security authority and having the advantages of the mobile unit here described, is something that is highly desired by governments, organisations or companies in need of equipment supporting a specific classification level.
11. A mobile encryption/decryption communications unit 140 according to any one of paragraphs 7-10, wherein the mobile unit comprises means for wireless communication of encrypted data.
12. A stationary communications unit 120, comprising
   a clear data interface 121, 122, 124, 125, 126 adapted for receiving and/or delivering data from/to an external device or user;
   an access point interface 130, 131 adapted for connecting the stationary unit 120 to a communications channel or network; and
   a security module interface 128 for enabling data transfer between a detachable security module 140 and the stationary unit 120, wherein the stationary communications unit 120 is adapted to interact with a user using an user interface 141 of the detachable security module 140
   This way a stationary unit is not only utilizing encryption/decryption via a detachable unit, but also its user interface. A user in a stationary environment is presented a user interface that is familiar from secure communication in a mobile environment. Consequently there is no need to learn how to use more than one user interface, and the stationary unit can be made with fewer features than if the stationary unit should be furnished with a complete own user interface. Additionally, the presence or absence of the common user interface, will, in an intuitive and natural way, make the user aware on whether the stationary unit is enabled for secure communication or not.
13. A stationary communications unit 120 according to paragraph 12, wherein the stationary communications unit 120 is automatically activated for communication when the detachable security module 140 is brought in contact with the security module interface 128.
   Automatically activation makes it very easy for a user to start using encryption in a stationary environment.
14. A stationary communications unit 120 according to paragraph 12 or 13, wherein the stationary unit 120 comprises features 121, 122 as of a conventional desktop telephone.
   A user that is familiar to using conventional insecure communication using a desktop telephone will easily adapt to and learn how to communicate secure if the units are as similar as possible.
15. A stationary communications unit 120 according to any one of paragraphs 12-14, wherein the stationary communications unit 120 has at least two, and preferably at least five clear data interfaces 121, 122, 124, 125, 126 each being adapted to input and/or output different types of clear data.
   The multiple ways of accessing clear data, typically different types such as fax, voice, text data etc, which may be permanently available to a stationary unit, provide a user with great possibilities for secure communication using the most suitable data representation.
16. A stationary communications unit 120 according to any one of paragraphs 12-15, wherein the stationary communications unit 120 has at least two access point interfaces 130, 131 providing connections to different communications channels or networks.
   Multiple access points interfaces, typically connected to different types of communications channels or networks, such as PSTN or Ethernet, and which may be permanently available to the stationary unit, provide a user with great possibilities for secure communication to any user, anywhere.
17. A clip-on unit 210 for a mobile unit 140, comprising a mobile unit interface 128 for enabling data transfer between the mobile unit 140and the clip-on unit 210,wherein the clip-on unit 210 is adapted to provide the mobile unit 140 with communication means 128, 211, 212, 213, the mobile unit being a mobile stand-alone encryption/decryption communications unit 140 having its own user interface 141.
   An advantage from this is that the mobile unit easily may be provided with an interchangeable interface to an user and/or an wireless access point, for example, in certain mobile environments the mobile unit may need to have access to some communications channels or networks that are only available through a certain access point, or a user may want to provide the unit with clear data using a certain type of interface. However, it is not possible to retain mobility of a device, neither it is economical, to provide the mobile unit with built in interfaces of all types that may be of interest to a user.
18. A clip-on unit 210 for a mobile unit 140according to paragraph 17, wherein the communication means 128, 211, 212, 213 is adapted to send and/or receive encrypted data to/from the mobile unit 140.
19. A clip-on unit 210 for a mobile unit 140 according to paragraph 17 or 18, wherein the communication means 128, 211, 212, 213 comprises a wireless access point.
   Because of the mobility it is not possible, nor economical, to furnish a mobile unit with built in multiple wireless access points providing access to all types of possible communications channels. A clip-on unit is a more efficient way to adapt a mobile unit to various types of wireless communication.
20. A clip-on unit 210 for a mobile unit 140 according to any one of paragraphs 17-19, wherein the communication means 128, 211, 212, 213 is adapted to send and/or receive clear data to/from a user of the mobile unit 140.
21. A clip-on unit 210 for a mobile unit 140 according to paragraph 20, wherein the communication means 128, 211, 212, 213 is adapted for voice communication and/or video communication.
Specific embodiments of the invention have now been described. However, several alternatives are possible, as would be apparent for someone skilled in the art, and some of which have been indicated in the foregoing. Such and other obvious modifications must be considered to be within the scope of the present invention, as it is defined by the appended claims.

## Claims

1. A security module (140), comprising
encryption means (160) for encrypting and decrypting data;
data communication means (143) adapted for receiving encrypted data and delivering decrypted data, and/or receiving clear data and delivering encrypted data;
a user interface (141); and
an access point interface (143) adapted for connecting the unit (140) to an external communications channel or network;
the security module (140) being usable both as a stand-alone mobile communications unit (140) and as a security module (140) for encryption/decryption when connected to a stationary communications unit (120), said stationary communications unit (120) being provided with a clear data interface (121, 122, 124, 125, 126) and an access point interface (130, 131).

2. The security module (140) as claimed in claim 1, wherein the security module (140) is arranged to receive clear data that has been input via the clear data interface (121, 122, 124, 125, 126) of the stationary communications unit (120) from the stationary communications unit (120), encrypt the clear data and output the clear data back as encrypted data to the stationary communications unit (120).

3. The security module (140) as claimed in any one of claims 1-2, wherein the security module (140) is provided with a graphical user interface.

4. The security module (140) as claimed in claim 3, wherein the user interface is a display through which the graphical user interface is available both when the security module (140) is detached from the stationary communications unit (120) and when it is connected to the stationary communications unit (120).

5. The security module (140) as claimed in any one of claims 1-4, wherein the security module (140) comprises encryption/decryption key management functions adapted to be presented to a user via the user interface (141).

6. The security module (140) as claimed in any one of claims 1-5, wherein the security module (140) is approved for communication of classified information by a national security authority.

7. The security module (140) as claimed in any one of claims 1-6, wherein the security module (140) comprises means for wireless communication of encrypted data.

8. The security module (140) as claimed in any one of claims 1-6, wherein the security module (140) is adapted to enable the stationary communications unit (120) to interact with a user using the user interface (141) of the security module (140).

9. A stationary communications unit (120) for interaction with the security module of any one of claims 1-8, comprising
a clear data interface (121, 122, 124, 125, 126) adapted for receiving and/or delivering data from/to an external device or user;
an access point interface (130, 131) adapted for connecting the stationary unit (120) to a communications channel or network; and
a security module interface (128) for enabling data transfer between the detachable security module (140) and the stationary communications unit (120).

10. The stationary communications unit (120) as claimed in claim 9, wherein, the stationary communications unit (120) is adapted to interact with a user using an user interface (141) of the detachable security module (140).

11. The stationary communications unit (120) as claimed in any one of claims 9-10, wherein the stationary unit (120) is arranged to deliver clear data that has been input via the clear data interface (121, 122, 124, 125, 126) to the security module (140) and receive the clear data back from the security module (140) as encrypted data.

12. The stationary communications unit (120) as claimed in any one of claims 9-11, wherein the stationary communications unit (120) is automatically activated for communication when the detachable security module (140) is brought in contact with the security module interface (128).

13. The stationary communications unit (120) as claimed in any one of claims 9-12, wherein the stationary communications unit (120) has at least two, and preferably at least five clear data interfaces (121, 122, 124, 125, 126) each being adapted to input and/or output different types of clear data.

14. The stationary communications unit (120) as claimed in any one of claims 9-13, wherein the stationary communications unit (120) has at least two access point interfaces (130, 131) adapted for providing connections to different communications channels or networks.

15. A secure communications system (100, 200) comprising a security module (140) according to any one of claims 1-8 and a stationary communications unit (120) according to any one of claims 9-14.
